# EUROPEAN PATENT APPLICATION

(11) **EP 4 618 560 A1**
(43) Date of publication of application: **17.09.2025**
(21) Application number: 23888140.3
(22) Date of filing: 10.11.2023
(51) Int. Cl.: H04N 21/431

(54) **LIVE-BROADCAST INTERACTION METHOD AND APPARATUS, AND ELECTRONIC DEVICE AND STORAGE MEDIUM**

(30) Priority: 10.11.2022 CN 202211408420
(71) Applicant: Beijing Zitiao Network Technology Co., Ltd., Beijing 100190 (CN)
(72) Inventor: XING, Duolai, Beijing 100028 (CN); LI, Yichen, Beijing 100028 (CN); LI, Yijie, Beijing 100028 (CN)
(74) Representative: Grünecker Patent- und Rechtsanwälte PartG mbB
(86) International application number: PCT/CN2023/131126
(87) International publication number: WO 2024/099455

(57) **Abstract**

Embodiments of the invention provide a live stream interaction method, apparatus, electronic device and storage medium. The method includes: displaying a first interaction component in a live stream interface of a target live stream room when a first predetermined condition is satisfied; receiving a trigger operation for the first interaction component; and in accordance with a determination that the trigger operation for the first interaction component satisfies a second predetermined condition, displaying a target effect in a live stream interface of the target live stream room. Because after the trigger condition is satisfied, the first interaction component is displayed first to guide an operation on the first interaction component, and then display of the target effect is triggered after the second predetermined condition is satisfied, the purpose of increasing the interaction capability of the live stream room is achieved, the user participation degree is improved, and the diversity of the triggering mode of the visual effect is enriched.

## Description

This application claims the benefit of Chinese Patent Application No. 202211408420.4, entitled "LIVE STREAM INTERACTION METHOD, APPARATUS, ELECTRONIC DEVICE AND STORAGE MEDIUM" filed Nov. 10, 2022, the entire content of which is incorporated herein by reference.

### FIELD

The embodiment of the invention relates to the technical field of Internet of Things, in particular to a live stream interaction method, apparatus, electronic device and storage medium.

### BACKGROUND

Currently, in a live stream application of a type of competitive events, a user may enter an event live stream room to watch a game live stream video. In this process, the user may trigger a specific visual effect in the event live stream room by using an effect prop provided by the client, to implement expression of emotion information such as happiness and sadness.

However, in the application scenario of competition event type live stream, in the solution in the prior art, there is a problem that the triggering manner of the visual effect is single and the interaction between multiple users cannot be achieved.

### SUMMARY

Embodiments of the invention provide a live stream interaction method, apparatus, electronic device and storage medium, and aims to overcome the problem that the triggering mode of the visual effect is single and the interaction between multiple users cannot be realized.

According to a first aspect, embodiments of the present disclosure provide a live stream interaction method, applied in a terminal device, including:
displaying a first interaction component in a live stream interface of a target live stream room in accordance with a determination that a first predetermined condition is satisfied; receiving a trigger operation for the first interaction component; and displaying a target effect in a live stream interface of the target live stream room in accordance with a determination that a trigger operation for the first interaction component satisfies a second predetermined condition.

According to a second aspect, embodiments of the present disclosure provide a live stream interaction method, applied in a server, including:
configuring a first interaction component for a target live stream room, wherein the first interaction component is displayed in a live stream interface of a target live stream room; receiving a trigger request for the first interaction component, and counting a total number of clicks, wherein the trigger request is generated based on a trigger operation for the first interaction component, and the total number of clicks represents a number of times of target user triggering on the first interaction component in the target live stream room; and in accordance with a determination that the total number of clicks reaches a first predetermined number of times, sending effect trigger information to a terminal device, to cause the terminal device to display a target effect in the live stream interface of the target live stream room.

According to a third aspect, embodiments of the present disclosure provide a live stream interaction apparatus, applied in a terminal device, including:
a display module, configured to display a first interaction component in a live stream interface of a target live stream room in accordance with a determination that a first predetermined condition is satisfied;
an interaction module, configured to receive a trigger operation for the first interaction component; and
a trigger module, configured to, in accordance with a determination that a trigger operation for the first interaction component satisfies a second predetermined condition, display a target effect in the live stream interface of the target live stream room.

According to a fourth aspect, embodiments of the present disclosure provide a live stream interaction apparatus, applied in a server, including:
a configuration module, configured to configure a first interaction component for a target live stream room, where the first interaction component is displayed in a live stream interface of a target live stream room;
a statistics module, configured to receive a trigger request for the first interaction component, where the trigger request is generated based on a trigger operation for the first interaction component; and
an effect module, configured to in accordance with a determination that the trigger request satisfies a second predetermined condition, send effect trigger information to a terminal device to cause the terminal device to display a target effect in the live stream interface of the target live stream room.

According to a fifth aspect, embodiments of the present disclosure provide an electronic device, including:
a processor, and a memory communicatively connected to the processor;
the memory storing computer executable instructions; and
the processor executing the computer-executable instruction stored in the memory to implement the live stream interaction method according to the first aspect and various possible designs of the first aspect, or the live stream interaction method according to the second aspect and the possible designs of the second aspect.

According to a sixth aspect, embodiments of the present disclosure provide a computer readable storage medium, where the computer readable storage medium stores a computer executable instruction, and when the processor executes the computer executable instruction, the live stream interaction method according to the first aspect and the possible designs of the first aspect is implemented, or the live stream interaction method according to the second aspect and the possible designs of the second aspect is implemented.

According to a seventh aspect, embodiments of the present disclosure provide a computer program product, including a computer program, where the computer program, when executed by a processor, implements the live stream interaction method according to the first aspect and the possible designs of the first aspect, or the live stream interaction method according to the second aspect and the possible designs of the second aspect.

According to the live stream interaction methods, apparatuses, electronic device and storage medium provided by the embodiments, the first interaction component is displayed in the live stream interface of the target live stream room if the first predetermined condition is satisfied; the trigger operation for the first interaction component is received; and when the trigger operation for the first interaction component satisfies the second predetermined condition, the target effect is displayed in the live stream interface of the target live stream room. Because after the trigger condition is satisfied, the first interaction component is displayed first to guide an operation on the first interaction component, and then display of the target effect is triggered after the second predetermined condition is satisfied, the purpose of increasing the interaction capability of the live stream room is achieved, the user participation degree is improved, and the diversity of the triggering mode of the visual effect is enriched.

### BRIEF DESCRIPTION OF DRAWINGS

In order to more clearly illustrate the embodiments of the present disclosure or the technical solutions in the prior art, the accompanying drawings used in the description of the embodiments or the prior art will be briefly introduced below, and it will be apparent that the drawings in the following description are some embodiments of the present disclosure, and those skilled in the art may also obtain other drawings according to these drawings without creative labor.
FIG. 1 is an application scenario diagram of a live stream interaction method according to embodiments of the present disclosure;
FIG. 2 is a first schematic flowchart of a live stream interaction method according to embodiments of the present disclosure;
FIG. 3 is a schematic diagram of a live stream interface according to embodiments of the present disclosure;
FIG. 4 is a schematic diagram of a first component appearance according to embodiments of the present disclosure;
FIG. 5 is a schematic diagram of displaying a number of combos provided according to embodiments of the present disclosure;
FIG. 6 is a second schematic flowchart of a live stream interaction method according to embodiments of the present disclosure;
FIG. 7 is a schematic diagram of a second interaction component according to embodiments of the present disclosure;
FIG. 8 is a schematic diagram of a process of determining a target effect based on participant information according to embodiments of the present disclosure;
FIG. 9 is a third schematic flowchart of a live stream interaction method according to embodiments of the present disclosure;
FIG. 10 is a schematic diagram of a process of performing statistics of a total of clicks by a server according to embodiments of the present disclosure;
FIG. 11 is a structural block diagram of a live stream interaction apparatus according to embodiments of the present disclosure;
FIG. 12 is a structural block diagram of another live stream interaction apparatus according to embodiments of the present disclosure;
FIG. 13 is a schematic structural diagram of an electronic device according to embodiments of the present disclosure;
FIG. 14 is a schematic diagram of a hardware structure of an electronic device according to embodiments of the present disclosure.

### DETAILED DESCRIPTION

**In** order to make the objectives, technical solutions and advantages of the embodiments of the present disclosure clearer, the technical solutions in the embodiments of the present disclosure will be clearly and completely described below with reference to the accompanying drawings in the embodiments of the present disclosure. All other embodiments obtained by those skilled in the art based on the embodiments of the present disclosure without creative efforts shall fall within the scope of the present disclosure.

The following describes an application scenario of embodiments of the present disclosure.

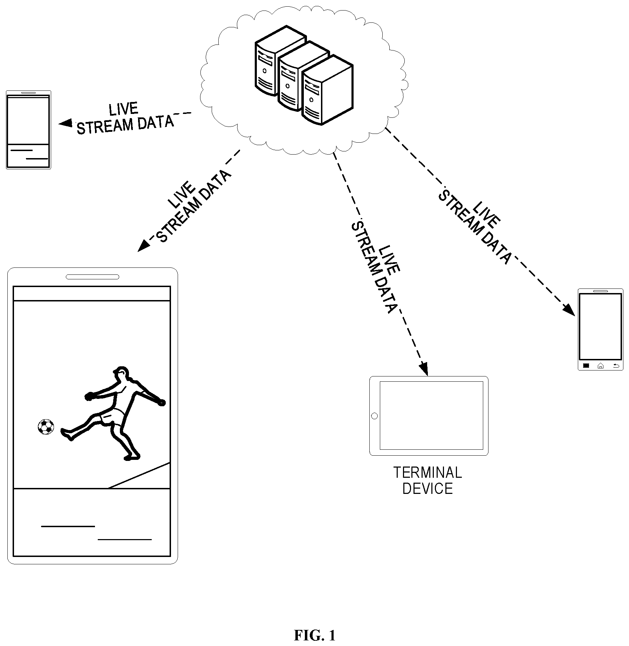

FIG. 1 is an application scenario diagram of a live stream interaction method according to embodiments of the present disclosure. The live stream interaction method provided in the embodiments of the present disclosure may be applied to the application scenario of competitive event live stream room. As shown in FIG. 1, the method provided in the embodiments of the present disclosure may be applied in a terminal device. The terminal device runs a client of a live stream application, the terminal device communicates with a server running the live stream server, the server sends the live stream data to the terminal device, and the terminal device obtains the live stream data and plays the live stream data in the client, to implement video live stream of a sports event such as a football game, a basketball game, an electronic sports game, and the like. In the related art, the client of the live stream application is provided with a predetermined effect prop, and after the user sends the request instruction for using the effect prop to the server through the operating client, the server side sends an effect triggering instruction to each terminal device, so that the client corresponding to each user in the live stream room triggers the corresponding visual effect.

**In** the related art, the user may enter the event live stream room and watch the game live stream video through the client running on the live stream application of the terminal device. In this process, the user may trigger a specific visual effect in the live stream interface by using the effect prop provided by the client, to implement interactive expression. However, in the application scenario of the live stream, limited by the display space in the live stream interface, only the visual effects that are separately triggered by a small number of users can be displayed, and most users cannot participate in it. Therefore, the triggering manner of the visual effect is single, and the interaction between multiple users cannot be achieved.

Embodiments of the invention provide a live stream interaction method to solve the problem.

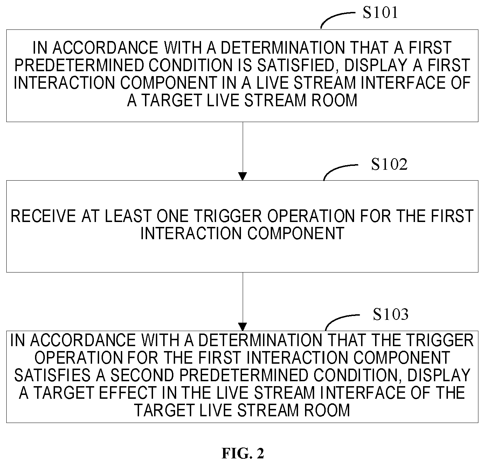

Referring to FIG. 2, FIG. 2 is a first schematic flowchart of a live stream interaction method according to embodiments of the present disclosure. The method of the embodiment may be applied in a terminal device, and the live stream interaction method includes the following steps.

Step S101: a first interaction component is displayed in a live stream interface of a target live stream room in accordance with a determination that a first predetermined condition is satisfied.

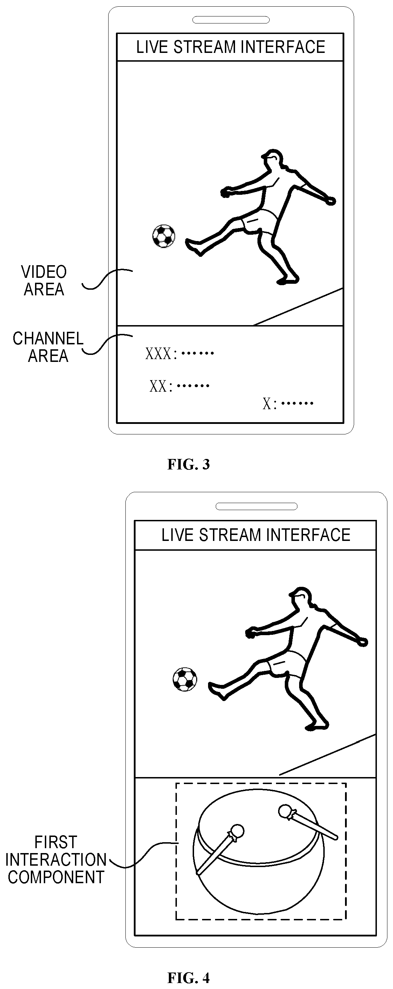

For example, the executing body of the method provided in the embodiment may be a first terminal device, for example, a smart phone. Referring to a schematic diagram of an application scenario shown in FIG. 1, a client is running a live stream application in the first terminal device, and the client of the live stream application is a client logged in by the target user. After entering the target live stream room through the client of the live stream application, the live stream interface of the target live stream room is displayed in the display screen of the first terminal device. FIG. 3 is a schematic diagram of a live stream interface according to embodiments of the present disclosure. As shown in FIG. 3, the live stream interface includes a video area and a channel area. The video area is a functional area configured for playing live videos. The channel area, also known as the public channel area, is a functional area configured for users in the live stream room to communicate with each other.

Further, when the client running in the first terminal device determines that the first predetermined condition is currently satisfied, an interaction component that can be triggered by the user operation is displayed in the live stream interface, that is, the first interaction component. The first interaction component has a first component appearance for guiding application of a trigger operation for the first interaction component. For example, the first predetermined condition is, for example, the configuration instruction sent by the server is received. When the configuration instruction sent by the server is received (the first predetermined condition is satisfied), the first interaction component is displayed. A specific implementation of the configuration instruction may be set as required, and details are not described herein again. Alternatively, the first predetermined condition is, for example, a trigger operation input by the user through the first terminal device is detected. For example, a trigger instruction is generated after the user clicks a certain trigger control, and the first interaction component is displayed in response to the trigger instruction. In some examples, the trigger operation is, for example, a click operation on the touch screen.

Further, the interaction component has a corresponding component appearance. A component appearance corresponding to the first interaction component is a first component appearance, and the first component appearance is used to guide the user to apply a consecutive trigger operation on the first interaction component. For example, the first component appearance is, for example, a percussion instrument capable of obviously guiding a user to continuously trigger the first interaction component. FIG. 4 is a schematic diagram of a first component appearance according to embodiments of the present disclosure. As shown in FIG. 4, a first component appearance of the first interaction component includes a "drum" (sticker), and the first component appearance may be dynamic to better perform a dynamic process of "drum striking". The user can understand the meaning expressed by the first component appearance through general knowledge, that is, striking the drum by applying consecutive trigger operations on the first interaction component. On this basis, optionally, an additional indication identifier may also be included in the first component appearance to explain the triggering manner of the first interaction component. For example, the first component appearance includes text "Keep striking the drum to cheer for the home team!" In this way, the purpose of guiding the user to apply consecutive trigger operations to the first interaction component is achieved. In addition, the first component appearance may also be other percussion instruments with obvious guidance, for example, "gong" (sticker), or other implementations of guiding the user to apply consecutive trigger operations to the first interaction component through the combination of other objects and indication identifiers, and details are not described herein again.

Step S102: at least one trigger operation for the first interaction component is received.

Step S103: a target effect is displayed in the live stream interface of the target live stream room in accordance with a determination that the trigger operation for the first interaction component satisfies the second predetermined condition.

For example, the target effect may refer to a visual effect and/or an auditory effect. The trigger operation is, for example, a click operation, a long-press operation, or the like. The second predetermined condition is, for example, the number of click operations reaches a predetermined number of times, or the long press operation reaches a predetermined duration. When the trigger operation is a click operation and the second predetermined condition is that when the total number of clicks reaches the first predetermined number of times, the target effect is displayed in the live stream interface of the target live stream room. The total number of clicks represents a number of times of user triggering on the first interaction component in the target live stream room, and more specifically, for example, the total number of times that all users in the live stream room click the first interaction component.

For example, after displaying the first interaction component in the live stream interface, based on the guidance effect of the first component appearance of the first interaction component, the user applies a trigger operation to the first interaction component by operating the first terminal device, for example, clicking the touch screen of the first terminal device. After receiving the trigger operation for the first interaction component, the first terminal device responds to the trigger operation. In a possible implementation, after receiving a trigger operation for the first interaction component, the first terminal device updates a number of user clicks corresponding to the first terminal device, that is, an accumulated value of trigger operations received by the first terminal device. Thereafter, for example, the first terminal device uploads the number of user clicks corresponding to the first terminal device to the server corresponding to the client of the live stream application based on a predetermined synchronization frequency.

At the same time, a second terminal device (running the client logged in by other users) corresponding to a further user in the target live stream room, counts the number of times the trigger operation for the first interaction component is received, obtains the number of user clicks corresponding to respective second terminal device, and uploads the number to the server.

Further, after the server receives the corresponding number of user clicks uploaded by each terminal device (the first terminal device and the at least one second terminal device) at a predetermined receiving frequency, the server accumulates the respective obtained numbers of user clicks to obtain a total number of clicks, and the total number of clicks represents the number of times of target user triggering on the first interaction component in the target live stream room. That is, the total number of clicks is the number of times the at least two target users in the target live stream room trigger the first interaction component.

**In** the process, before the total number of clicks is smaller than the first predetermined number of times, the server continuously receives the corresponding number of user clicks uploaded by each terminal device and updates the total number of clicks. In a possible implementation, when the total number of clicks is larger than or equal to a first predetermined number of times, the server sends an effect trigger instruction to each terminal device (including the first terminal device), and after the first terminal device receives the effect trigger instruction, it is determined that the total number of clicks reaches the first predetermined number of times. Otherwise, before the first terminal device receives the effect trigger instruction, it is determined that the total number of clicks does not reach the first predetermined number of times. In another possible implementation, the server sends, to the first terminal device, real-time live stream data including the total number of clicks in real time, and the first terminal device determines, according to the received total number of clicks, whether the current total number of clicks reaches the first predetermined number of times. Then, after the first terminal device determines that the current total number of clicks reaches the first predetermined number of times, the first terminal device displays a predetermined target effect in the live stream interface of the target live stream room, to implement the multi-person interactive trigger of the target effect.

Further, after receiving the at least one trigger operation for the first interaction component, the live stream interaction method provided in the embodiment further includes the following steps.

Step S102A: a corresponding action image is displayed in response to the at least one trigger operation for the first interaction component, the action image representing a percussion action applied to the first component appearance.

For example, after the first interaction component receives the trigger instruction, a corresponding action image is drawn in the live stream interface. For example, the first component appearance is "drum", and the action image is an image of striking the "drum", so as to represent a percussion action on the first component appearance. Then, in response to trigger operations on the first interaction component for multiple times, the action image is continuously refreshed, so that the first component appearance exhibits a dynamically changing visual effect. One trigger operation corresponds to the drawing of one action image, and the refresh of drawing of the action image is the response to one trigger operation.

Optionally, after receiving the at least one trigger operation for the first interaction component, the live stream interaction method provided in the embodiment further includes:

Step S102B: displaying a number of combos, where the number of combos represents, in the process of responding to the trigger operation multiple times, a number of times that the trigger operation is consecutively determined as a combo operation; wherein when an interval duration between a currently responded trigger operation and a previously responded trigger operation is less than a predetermined duration, the currently responded trigger operation is determined to be the combo operation.

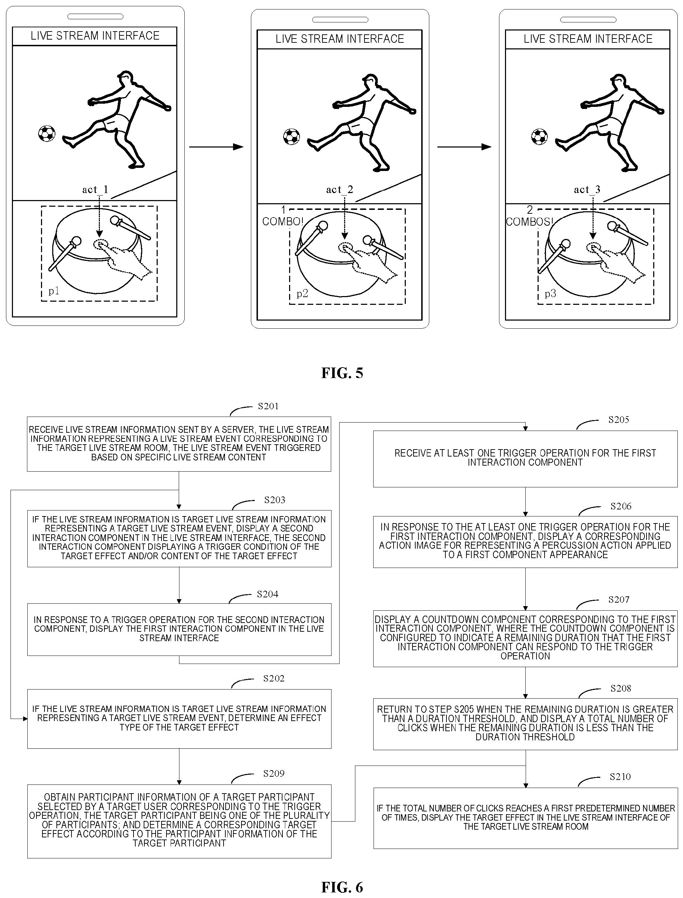

For example, step S102B is performed synchronously in the process performed in step S102A. That is, in response to the trigger operation, the corresponding action image is displayed, and the corresponding number of combos is displayed. The number of combos refers to the number of times that the trigger operation is consecutively determined as the combo operation, and the combo operation refers to trigger operation performed consecutively in a short time. For example, if the interval duration between two trigger operations is less than 1 second, the latter trigger operation is determined as the combo operation. The larger the times that a trigger operation is determined as the combo operation consecutively, the larger the number of combos is. FIG. 5 is a schematic diagram of displaying a number of combos according to embodiments of the present disclosure, and the implementation of steps S102A and S102B is described below with reference to FIG. 5. As shown in FIG. 5, the user operates the terminal device to apply a first trigger operation, i.e., trigger operation act _ 1 (shown as act _ 1), the terminal device displays the action image p1 (shown as p1 in the figure) in response to the trigger operation act _ 1. Because the trigger operation act _ 1 is the first trigger operation, the number of combos is not displayed. The user operates the terminal device to apply a second trigger operation, i.e., trigger operation act _ 2 (shown as act _2), and the terminal device displays the action image p2 (shown as p2 in the figure) in response to the trigger operation act _ 2. At the same time, the interval between the trigger operation act _ 2 and the trigger operation act _ 1 is obtained as 0.5 second. The predetermined duration is 1 second, the interval duration is less than the predetermined duration, and the terminal device determines the trigger operation act _ 2 as the combo operation, and displays the number of combos, i.e., the sum (sum = 1, shown as "1 combo!" in the figure). Then, the applied third trigger operation is a trigger operation act _3, and the terminal device displays an action image p3 (shown as p3 in the figure) in response to the trigger operation act _ 3 (shown as act _ 3), where the action image p3 may be the same as or different from the action image p1. In a possible case, when the interval duration between the trigger operation act _ 3 and the trigger operation act _ 2 is, for example, 1.2 seconds, the interval duration is greater than the predetermined duration, then the number of combos, i.e., the sum of combos is cleared, and the number of combos is not displayed (this case is not shown in the figure). In another possible case, the interval duration between the trigger operation act _ 3 and the trigger operation act _ 2 is, for example, 0.4 second, the duration of the interval is less than the predetermined duration, and the number of combos, i.e., the sum of combos continues to be accumulated, and the number of combos, i.e., the sum of combos is displayed (sum = 2, shown in the figure as "2 combos!").

**In** this step, the user is guided to perform quick and consecutive trigger operations by displaying the number of combos while displaying the action image, thereby improving the probability of triggering the target effect, enhancing the participation sense of the user and improving the interactive effect of the live stream room.

**In** the embodiment, when the first predetermined condition is satisfied, the first interaction component is displayed in the live stream interface of the target live stream room, where the first interaction component has a first component appearance, and the first component appearance is used to guide application of a trigger operation to the first interaction component. At least one trigger operation for the first interaction component is received, and when the total number of clicks reaches the first predetermined number of times, the target effect is displayed in the live stream interface of the target live stream room, where the total number of clicks is the number of times the at least two target users in the target live stream room trigger the first interaction component. Because after the trigger condition is satisfied, the first interaction component is firstly displayed, to guide consecutive clicks on the first interaction component, and after the total number of clicks of the multiple users in the target live stream room for the first interaction component reaches a predetermined number of times, the display of the target effect is triggered, thus the purpose of triggering the visual effect in a multi-person interaction mode is achieved, the interaction capability of the live stream room is improved, the user participation degree is improved, and the triggering mode diversity of the visual effect is enriched.

Referring to FIG. 6, FIG. 6 is a second schematic flowchart of a live stream interaction method according to embodiments of the present disclosure. Based on the embodiment shown in FIG. 2, the embodiment adds a step of interacting with a server (a server side) and determining a target effect, where the live stream interaction method includes the following steps.

Step S201: live stream information sent by a server is received, where the live stream information represents a live stream event corresponding to the target live stream room, and the live stream event is triggered based on specific live stream content.

Step S202: in accordance with a determination that the live stream information is target live stream information representing a target live stream event, an effect type of a target effect is determined based on the target live stream information.

For example, the live stream data sent to the terminal device (client) from the server (the server) includes live stream information representing the live stream event, where the live stream event is an event triggered based on the live stream content and representing a specific content segment. For example, if the live stream content played in the target live stream room is "football game", the live stream event corresponding to the live stream content includes, for example, "goal", "person change", "foul", "start of the first/second half", "end of the first/second half", and the like. The live stream event is triggered based on the live stream content, that is, when the live stream content satisfies a requirement (for example, a foul or a goal occurs), the server sends live stream information to the terminal device, and the live stream information includes an event identifier representing the live stream event.

Further, after receiving the live stream information, the first terminal device determines, based on the event identifier therein, what specific live stream event occurs in the current live stream, for example, a goal, a game start, an end of a game, and the like. If the live stream information is the target live stream information representing the target live stream event, for example, the live stream information representing the "goal" (live stream event), the effect type corresponding to the live stream event is determined based on the target live stream information. For example, if the target live stream information corresponds to "game start", the corresponding target effect is the effect type A, and the effect type A is the visual effect of "light fireworks". If the target live stream information corresponds to the "end of a game", the corresponding target effect is the effect type B, and the effect type B is the visual effect of the "audience clap".

**In** the embodiment, the effect type of the target effect is determined through the live stream information, so that the target effect corresponds to the live stream content of the target live stream room. In the application scenario of the game live stream room, the visual effect display matched with the game process is realized, and the visual impression of the user in watching the game is improved.

Step S203: in accordance with a determination that the live stream information is the target live stream information representing the target live stream event, a second interaction component is displayed in the live stream interface, and the second interaction component displays a trigger condition of the target effect and/or content of the target effect.

Step S204: the first interaction component is displayed in the live stream interface of the target live stream room in response to a trigger operation for the second interaction component.

Further, in order to avoid affecting the user with low interaction willingness and interfering with the game viewing experience of such users, for example, when the live stream information is the target live stream information representing the target live stream event, the second interaction component is displayed in the live stream interface according to the content of the target live stream information, and the component appearance of the second interaction component displays the trigger condition of the target effect and/or the content of the target effect.

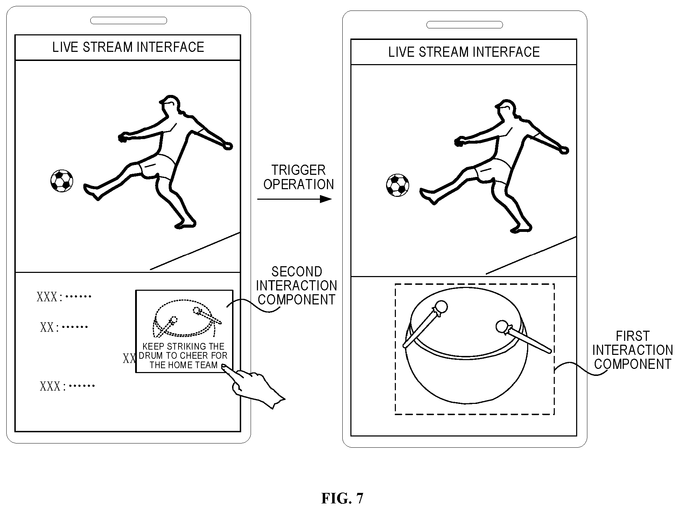

FIG. 7 is a schematic diagram of a second interaction component according to embodiments of the present disclosure. As shown in FIG. 7, after the target live stream information is received, a second interaction component is displayed within the channel area of the live stream interface in the target live stream room. The second interaction component displays text that describes a trigger condition and content of the target effect, as illustrated, including "Keep striking the drum to cheer for the home team!".

Further, on one hand, if the user applies a trigger operation to the second interaction component, for example, clicking on the second interaction component, a first interaction component is popped up in the target live stream room, and then the user can further operate the first interaction component to trigger the target effect of "cheer for the home team". On the other hand, if the user does not apply the trigger operation to the second interaction component, the first interaction component would not be further triggered. Optionally, after a predetermined hover duration, the second interaction component is hidden, and interference to the user with low interaction willingness is avoided.

In the embodiment, by setting the pre-set second interaction component before the first interaction component, optional triggering of the first interaction component is implemented, so that the personalized requirements of different users can be met, and the use flexibility and the application range of the method in the embodiment are improved.

Step S205: at least one trigger operation for the first interaction component is received.

Step S206: a corresponding action image is displayed in response to the at least one trigger operation for the first interaction component, the action image representing a percussion action applied to the first component appearance.

The specific implementation of steps S205 and S206 in the embodiment is described in detail in the implementation of step S102 in the embodiment shown in FIG. 2, and details are not described herein again.

Step S207: a countdown component corresponding to the first interaction component is displayed, where the countdown component indicates a remaining duration that the first interaction component can respond to a trigger operation.

Step S208: when the remaining duration is greater than a duration threshold, Step S205 is returned to. The total number of clicks is displayed after the remaining duration is less than the duration threshold.

For example, the duration threshold may be a time length that is set on demand, for example, 1 second or 0 second. If the duration threshold is 0 second, when the countdown ends, the total number of clicks is displayed. Specifically, for example, a first display phase is defined as a period of time starting from the first interaction component can respond to a trigger operation and ending at the first interaction component stop responding to any trigger operation. In the process of displaying the corresponding action image in response to the at least one trigger operation for the first interaction component, the countdown component is displayed in the live stream interface of the target live stream room and the countdown component dynamically displays the remaining duration of the first display phase in a countdown manner of seconds. Therefore, the user is guided to perform quick and consecutive trigger operations, so that the probability of triggering the target effect is improved, the participation sense of the user is enhanced, and the interactive effect of the live stream room is improved.

The display of the countdown component may be displayed immediately after the first interaction component is displayed (that is, upon the start of the first display phase), or may be displayed after the trigger condition is satisfied. For example, it is displayed 4 seconds after the first display phase starts; or 5 seconds before the first display phase ends. Details are not described herein again.

Step S209: participant information of a target participant selected by a target user corresponding to the trigger operation is obtained, where the target participant is one of a plurality of participants; and a corresponding target effect according to the participant information of the target participant is determined.

**Step** S210: if the total number of clicks reaches the first predetermined number of times, the live stream interface of the target live stream room displays the target effect.

For example, the live stream content of the live stream room relates to multiple participants. For example, the live stream content of the target live stream room relates to a first team and a second team, taking the football game as an example, for example, home team and away team. The participant information is used to indicate a target team in the first team and the second team, that is, the target participant. The participant information is generated based on a team selection instruction sent by the target user to the target live stream room. That is, the participant information is generated by a selection operation in the target live stream room to select a supported team as the target team.

Specifically, before the target effect is displayed, the style of the target effect may be further determined based on the participant information corresponding to the target user, where the participant information represents the target team selected by the target user in the target live stream room. Specifically, in a possible implementation, when the target user watches the game live stream in the target live stream room, the client may select the target team supported by the target user, generate participant information, and synchronize the participant information to the server of the target live stream room. After determining the target visual image, the terminal device determines a target effect matching the team supported by the terminal device based on the participant information of the target user corresponding to the first terminal device. And after the total number of clicks reaches the first predetermined number of times, the target effect matched with the target team supported by the target is displayed.

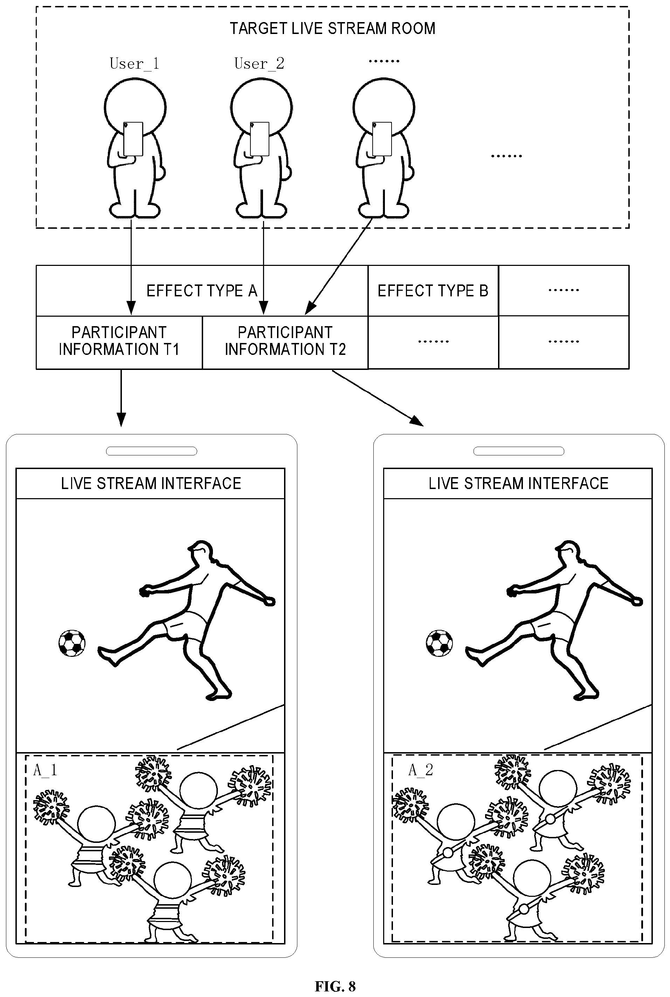

FIG. 8 is a schematic diagram of a process of determining a target effect based on participant information according to embodiments of the present disclosure. As shown in FIG. 8, the live stream content corresponding to the target live stream room is a "football match." Based on the operation of the target user on each client side, the participant information T1 corresponding to the target user User _ 1 represents the home team; the participant information T2 corresponding to the target user User _ 2 represents the away team. Based on the participant information of the target user User _ 1 and the target user User _ 2 and the effect type of the target effect determined in the step S202, when the effect type A (in addition to this, for example, the effect type B and the like may be included), the target effect corresponding to the participant information T1 is A_ 1 (shown as A _ 1); and the target effect corresponding to the participant information T2 is A _ 2. More specifically, for example, as shown in the figure, the effect type A corresponds to the "cheering" effect, and the target effect displayed in the first terminal device of the target user User _ 1 is A_ 1, which is the effect of "wearing home team jersey and cheering"; and the target effect displayed in the second terminal device of the target user User _ 2 is A _ 2, which is the effect of "wearing away team jersey and cheering". Optionally, for a visual effect of a predetermined effect type, for example, "audience cheering", "team cheering", "highlight playback", etc., at least two specific sticker styles are predetermined, and each participant information corresponds to at least one sticker style, thereby realizing dynamic display of the target effect based on participant information.

In the embodiment, the participant information is obtained, and the corresponding target effect is determined based on the participant information, so that the visual effect display matched with the team selected by the user is realized, the interactive participation sense of the user is improved, and the expressive force of the visual effect is improved.

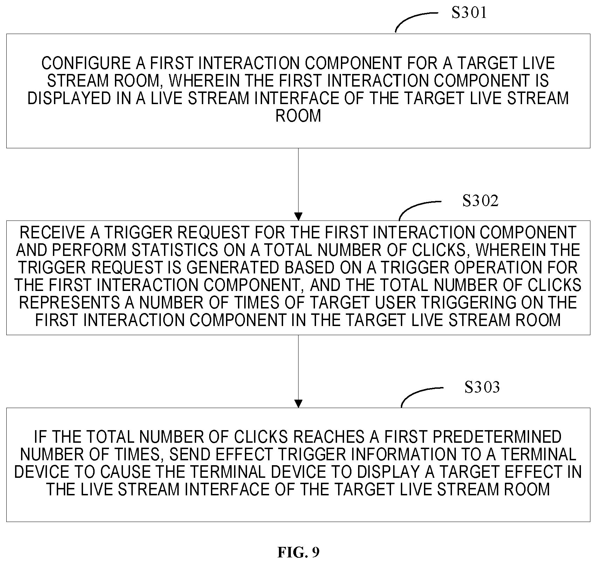

FIG. 9 is a third schematic flowchart of a live stream interaction method according to embodiments of the present disclosure. The method of the embodiment may be applied in a server, and the live stream interaction method includes:
Step S301: configuring a first interaction component for the target live stream room, wherein the first interaction component is displayed in a live stream interface of the target live stream room;
Step S302: receive a trigger request for the first interaction component, and perform statistics on a total number of clicks, where the trigger request is generated based on a trigger operation for the first interaction component, and the total number of clicks represents a number of times of target user triggering on the first interaction component in the target live stream room; and
Step S303: if the total number of clicks reaches a first predetermined number of times, sending effect trigger information to a terminal device, to cause the terminal device to display the target effect in the live stream interface of the target live stream room.

For example, the executing body of the embodiment is a server, the server is communicatively connected to the first terminal device in any embodiment corresponding to FIG. 2 to FIG. 10, and the server is configured to run the server corresponding to the client of the live stream application in any embodiment corresponding to FIG. 2 to FIG. 10. Specifically, the server corresponds to the target live stream room, and is configured to provide a background service for the target live stream room. A target user entering the target live stream room connects with the server through the corresponding terminal device, and receives live stream data sent by the server, specifically referring to the application scenario schematic shown in FIG. 1.

For example, after the target live stream room starts to play, the server may configure the first interaction component for the target live stream room, so that the first interaction component is displayed in the live stream interface of the target live stream room on the client side. The first interaction component has a first component appearance, and the first component appearance is used to guide application of a trigger operation for the first interaction component. The first component appearance is used to guide application of a trigger operation for the first interaction component. In a possible implementation, after determining that the first predetermined condition is currently satisfied, the server configures the first interaction component for the target live stream room. Specifically, the first predetermined condition is, for example, when the server identifies or receives the live stream information representing the target live stream event according to the live stream content, sending a configuration instruction to the terminal device. After receiving the configuration instruction sent by the server, the terminal device displays the first interaction component. Alternatively, when the target number of users in the target live stream room reaches the predetermined number at a specific time instant, the terminal device sends a configuration instruction to the terminal device. After receiving the configuration instruction sent by the server, the terminal device displays the first interaction component, where the specific implementation of the configuration instruction may be set as needed, and details are not described herein again. Further, for a specific implementation of the first interaction component, reference may be made to the related description in the embodiment shown in FIG. 2, and details are not described herein again.

Further, after receiving the trigger operation corresponding to the user on one side of the terminal device, a trigger request for the first interaction component is generated, and the trigger request is sent to the server. Then the server performs statistics on the trigger request sent by each server to obtain the total number of clicks, and the total number of clicks is the number of times the at least two target users in the target live stream room trigger the first interaction component. After the total number of clicks reaches the first predetermined number, the effect trigger information is sent to the respective terminal device corresponding to each target user in the target live stream room. After receiving the trigger information, each terminal device displays the target effect. Thus, the target effect is triggered.

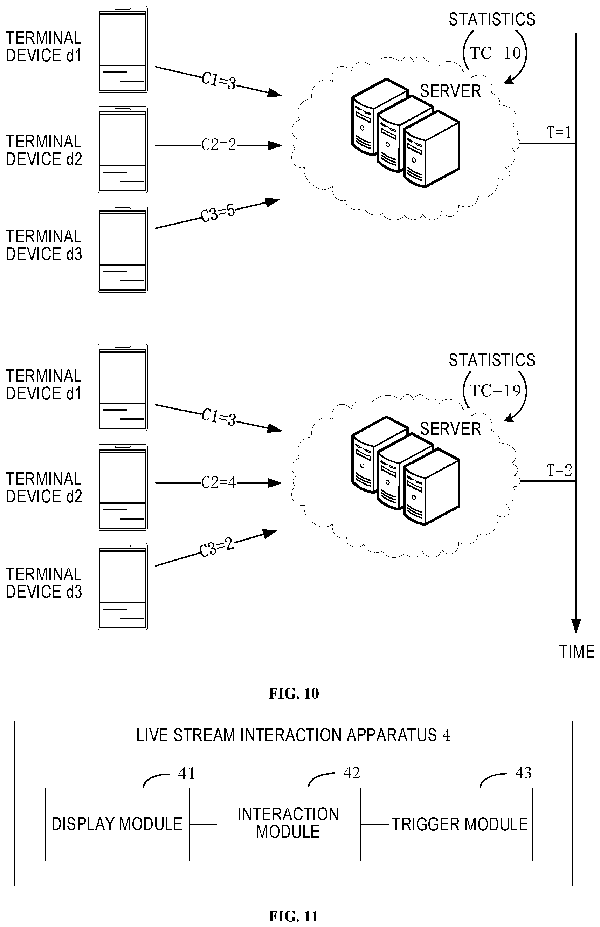

FIG. 10 is a schematic diagram of a process of performing statistics on a total number of clicks by a server according to embodiments of the present disclosure. As shown in FIG. 10, a server running a live stream application server end obtains, every other 1 second, a number of user clicks uploaded by respective terminal devices corresponding to all users in the target live stream room (for example, including a terminal device d1, a terminal device d2, and a terminal device d3). Specifically, at the moment T = 1, a number of user clicks C1 uploaded by the terminal device d1 is C1 = 3, indicating that the terminal device d1 receives three trigger operations for the first interaction component within one sampling interval (1 second); a number of user clicks C2 uploaded by the terminal device d2 is C2 = 2, indicating that the terminal device d2 receives two trigger operations for the first interaction component within one sampling interval (1 second); a number of user clicks C3 uploaded by the terminal device d3 is C3 = 5, indicating that the terminal device d3 receives five trigger operations for the first interaction component within one sampling interval (1 second). The server performs statistics on the number of user clicks C1, the number of user clicks C2, and the number of user clicks C3, to obtain a total number of clicks TC = 10. At the moment T = 2, the number of user clicks C1 = 3 is uploaded by the terminal device d1, and the meaning is the same as that before, and details are not described herein again; the number of user clicks C2 = 4 is uploaded by the terminal device d2; the number of user clicks C3 = 5 is uploaded by the terminal device d3. The server performs statistics on the number of user clicks C1, the number of user clicks C2 and the number of user clicks C3 again, and accumulates the total number of clicks of T = 1 to obtain the total number of clicks TC = 19. In this way, as each terminal device in the target live stream room continuously receives the trigger operations for the first interaction component and uploads the numbers of user clicks, the total number of clicks corresponding to the target live stream room is continuously increased until the first predetermined number of times is reached.

**In** the embodiment, the first interaction component is configured for the target live stream room, where the first interaction component is displayed in the live stream interface of the target live stream room, the first interaction component has a first component appearance, and the first component appearance is used to guide application of a trigger operation to the first interaction component. A trigger request for the first interaction component is received, and the total number of clicks is counted, where the trigger request is generated based on the trigger operation for the first interaction component, and the total number of clicks is the number of times that at least two target users in the target live stream room trigger the first interaction component. If the total number of clicks reaches the first predetermined number of times, the effect trigger information is sent to the terminal device to cause the terminal device to display the target effect in the live stream interface of the target live stream room. By configuring the first interaction component for the target live stream room, consecutive clicks on the first interaction component are guided. By performing statistics on the total number of clicks of the multiple users in the target live stream room for the first interaction component and triggering the display of the target effect after the total number of clicks reaches the predetermined number of times, the purpose of triggering the visual effect in a multi-person interaction mode is achieved, the interaction capability of the live stream room is improved, the user participation degree is improved, and the diversity of the triggering mode of the visual effect is enriched.

Corresponding to the live stream interaction method in the embodiments shown in FIG. 2 to FIG. 8 above, FIG. 11 is a structural block diagram of a live stream interaction apparatus according to embodiments of the present disclosure. For ease of illustration, only portions related to embodiments of the present disclosure are shown. Referring to FIG. 11, the live stream interaction apparatus 4 includes:
**a** display module 41 configured to display a first interaction component in a live stream interface of a target live stream room in accordance with a determination that a first predetermined condition is satisfied;
an interaction module 42 configured to receive a trigger operation for the first interaction component; and
a trigger module 43 configured to, in accordance with a determination that a trigger operation for the first interaction component satisfies a second predetermined condition, display a target effect in a live stream interface of the target live stream room.

**In** embodiments of the present disclosure, the display module 41 is specifically configured to: receive live stream information sent by a server, where the live stream information represents a live stream event corresponding to the target live stream room; and in accordance with a determination that the live stream event corresponding to the live stream information is a target event, display a first interaction component in a live stream interface of the target live stream room, where the first interaction component has a first component appearance for guiding application of a trigger operation to the first interaction component.

**In** embodiments of the present disclosure, before displaying the target effect in the live stream interface of the target live stream room, the trigger module 43 is further configured to: determine an effect type of the target effect based on the live stream information.

**In** embodiments of the present disclosure, after receiving the at least one trigger operation for the first interaction component, the interaction module 42 is further configured to: in response to at least one trigger operation for the first interaction component, display a corresponding action image for representing a percussion action applied to the first component appearance.

**In** embodiments of the present disclosure, the live stream interface further includes a second interaction component, and the second interaction component displays the trigger condition of the target effect and/or the content of the target effect; the display module 41 is specifically configured to display the first interaction component in the live stream interface of the target live stream room in response to the trigger operation for the second interaction component.

**In** embodiments of the present disclosure, the trigger module 43 is specifically configured to: in accordance with a determination that the total number of clicks for the first interaction component reaches a first predetermined number of times, display a target effect in the live stream interface of the target live stream room, where the total number of clicks represents the number of times of target user triggering on the first interaction component in the target live stream room.

**In** embodiments of the present disclosure, after displaying the first interaction component in the live stream interface of the target live stream room, the trigger module 43 is further configured to: display a countdown component corresponding to the first interaction component, where the first interaction component may respond to a remaining duration of the trigger operation; and after the remaining duration is less than the duration threshold, display the total number of clicks.

In embodiments of the present disclosure, the trigger module 43 is further configured to: display a number of combos, where the number of combos represents in a process of responding to the trigger operation multiple times, a number of times that the trigger operation is consecutively determined to be a combo operation; and wherein in accordance with a determination that an interval duration between a currently responded trigger operation and a previously responded trigger operation is less than a predetermined duration, the currently responded trigger operation is determined to be the combo operation.

In embodiments of the present disclosure, the live stream content of the live stream room relates to a plurality of participants, and the trigger module 43 is further configured to: obtain participant information of a target participant selected by a target user corresponding to the trigger operation, where the target participant is one of the plurality of participants; and determine a corresponding target effect based on the participant information of the target participant.

The display module 41, the interaction module 42, and the trigger module 43 are connected in sequence. The live stream interaction apparatus 4 provided in the embodiment may perform the technical solutions of the method embodiments corresponding to FIG. 2 to FIG. 8, and implementation principles and technical effects thereof are similar, and details are not described herein again in the embodiment.

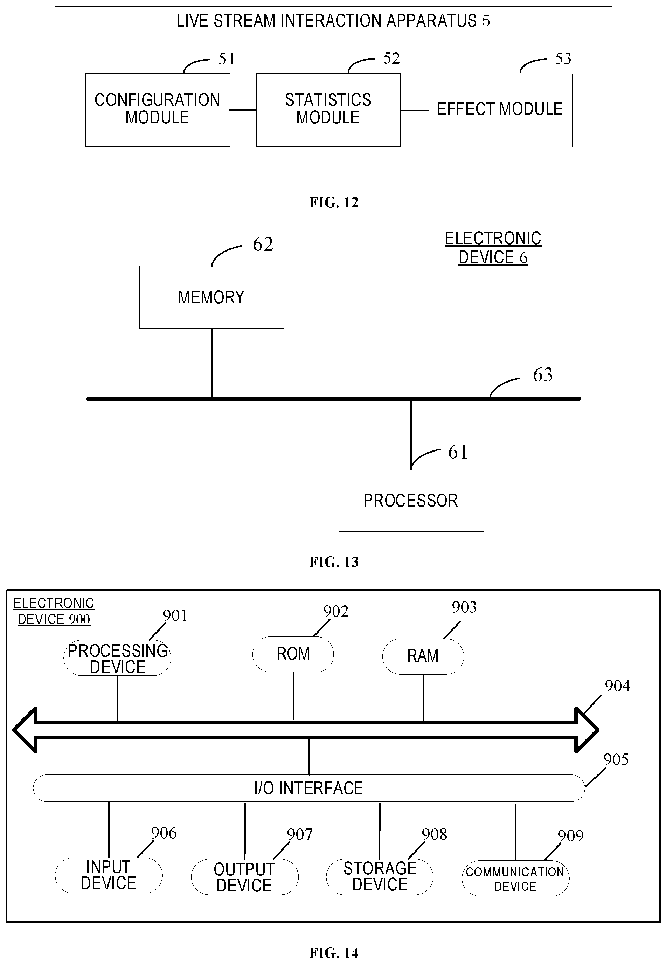

Corresponding to the live stream interaction method in the embodiments shown in FIG. 9 to FIG. 10 above, FIG. 12 is a structural block diagram of another live stream interaction apparatus according to embodiments of the present disclosure. For ease of illustration, only portions related to embodiments of the present disclosure are shown. Referring to FIG. 12, the live stream interaction apparatus 5 includes:
a configuration module 51 configured to configure a first interaction component for a target live stream room, where the first interaction component is displayed in a live stream interface of the target live stream room;
a statistics module 52 configured to receive a trigger request for a first interaction component, where the trigger request is generated based on a trigger operation for the first interaction component; and
an effect module 53 configured to in accordance with a determination that the trigger request satisfies the second predetermined condition, send effect trigger information to the terminal device to cause the terminal device to display the target effect in the live stream interface of the target live stream room.

The configuration module 51, the statistics module 52, and the effect module 53 are connected in sequence. The live stream interaction apparatus 5 provided in the embodiment may perform the technical solutions of the method embodiments corresponding to FIG. 9 to FIG. 10, and implementation principles and technical effects thereof are similar, and details are not described herein again in the embodiment.

FIG. 13 is a schematic structural diagram of an electronic device according to embodiments of the present disclosure. As shown in FIG. 13, an electronic device 6 includes:
a processor 61, and a memory 62 communicatively connected to the processor 61;
the memory 62 stores computer executable instructions; and
the processor 61 executes the computer-executable instruction stored in the memory 62 to implement the live stream interaction method in the embodiments shown in FIG. 2 to FIG. 10.

Optionally, the processor 61 and the memory 62 are connected by using a bus 63.

Related descriptions may be understood with reference to related descriptions and effects corresponding to the steps in the embodiments corresponding to FIG. 2 to FIG. 10, and details are not described herein again.

FIG. 14 shows a schematic structural diagram of an electronic device 900 suitable for implementing embodiments of the present disclosure, and the electronic device 900 may be a terminal device or a server. The terminal device may include, but is not limited to, a mobile terminal such as a mobile phone, a notebook computer, a digital broadcast receiver, a personal digital assistant (PDA), a tablet computer (PAD), a portable multimedia player (PMP), an in-vehicle terminal (for example, an in-vehicle navigation terminal), and a fixed terminal such as a digital TV, a desktop computer, or the like. The electronic device shown in FIG. 14 is merely an example, and should not impose any limitation on the functions and scope of use of the embodiments of the present disclosure.

As shown in FIG. 14, the electronic device 900 may include a processing device (for example, a central processing unit, a graphics processor, etc.) 901, which may perform various appropriate actions and processing according to a program stored in a read only memory (ROM) 902 or a program loaded into a random access memory (RAM) 903 from a storage device 908. In the RAM 903, various programs and data required by the operation of the electronic device 900 are also stored. The processing device 901, the ROM 902, and the RAM 903 are connected to each other through a bus 904. Input/output (I/O) interface 905 is also connected to bus 904.

Generally, the following devices may be connected to the I/O interface 905: an input device 906 including, for example, a touch screen, a touch pad, a keyboard, a mouse, a camera, a microphone, an accelerometer, a gyroscope, etc. ; an output device 907 including, for example, a liquid crystal display (LCD), a speaker, a vibrator, etc. ; a storage device 908 including, for example, a magnetic tape, a hard disk, etc. ; and a communication device 909. The communication device 909 may allow the electronic device 900 to communicate wirelessly or wired with other devices to exchange data. While FIG. 14 shows an electronic device 900 having various devices, it should be understood that it is not required to implement or have all illustrated devices. More or fewer devices may alternatively be implemented or provided.

In particular, according to embodiments of the present disclosure, the process described above with reference to the flowchart may be implemented as a computer software program. For example, embodiments of the present disclosure include a computer program product comprising a computer program embodied on a computer readable medium, the computer program comprising program code for performing the method shown in the flowchart. In such embodiments, the computer program may be downloaded and installed from the network through the communication device 909, or installed from the storage device 908, or from the ROM 902. When the computer program is executed by the processing apparatus 901, the foregoing functions defined in the method of the embodiments of the present disclosure are performed.

It should be noted that the computer-readable medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, device, or device, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or device. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted with any suitable medium, including, but not limited to: wires, optical cables, RF (radio frequency), and the like, or any suitable combination of the foregoing.

The computer-readable medium described above may be included in the electronic device; or may be separately present without being assembled into the electronic device.

The computer-readable medium carries one or more programs, and when the one or more programs are executed by the electronic device, the electronic device is enabled to perform the method shown in the foregoing embodiments.

Computer program code for performing the operations of the present disclosure may be written in one or more programming languages, including object oriented programming languages, such as Java, Smalltalk, C + +, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (for example, using an Internet service provider for Internet connection).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware. For example, the first obtaining unit may be further described as "obtaining at least two units of Internet Protocol addresses".

The functions described above may be performed, at least in part, by one or more hardware logic components. For example, without limitation, exemplary types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, devices, or devices, or any suitable combination of the foregoing. More specific examples of machine-readable storage media may include electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

According to a first aspect, according to one or more embodiments of the present disclosure, a live stream interaction method is provided, applied in a terminal device, including:
in accordance with a determination that a first predetermined condition is satisfied, displaying a first interaction component in a live stream interface of a target live stream room; receiving a trigger operation for the first interaction component; in accordance with a determination that a total number of clicks reaches a first predetermined number of times, displaying a target effect in a live stream interface of the target live stream room, where the total number of clicks represents a number of times of target user triggering on the first interaction component in the target live stream room.

According to one or more embodiments of the present disclosure, the displaying a first interaction component in a live stream interface of a target live stream room when a first predetermined condition is satisfied comprises: receiving live stream information sent by a server, where the live stream information represents a live stream event corresponding to the target live stream room; and when a live stream event corresponding to the live stream information is a target event, displaying a first interaction component in a live stream interface of the target live stream room, where the first interaction component has a first component appearance for guiding application of a trigger operation to the first interaction component.

According to one or more embodiments of the present disclosure, before displaying the target effect in the live stream interface of the target live stream room, the method further includes: determining an effect type of the target effect based on the live stream information.

According to one or more embodiments of the present disclosure, the live stream interface further includes a second interaction component, and the second interaction component displays the trigger condition of the target effect and/or the content of the target effect; the displaying the first interaction component in the live stream interface of the target live stream room when the first predetermined condition is satisfied includes: displaying the first interaction component in the live stream interface of the target live stream room in response to the trigger operation for the second interaction component.

According to one or more embodiments of the present disclosure, after displaying the first interaction component in the live stream interface of the target live stream room, the method further includes: displaying a countdown component corresponding to the first interaction component, where the countdown component is used to indicate a remaining duration that the first interaction component can respond to a trigger operation; and after the remaining duration is less than the duration threshold, displaying the total number of clicks.

According to one or more embodiments of the present disclosure, the method further comprises: displaying a number of combos, wherein the number of combos represents a number of times that the trigger operation is consecutively determined to be a combo operation in a process of responding to the trigger operation for a plurality of times; wherein in accordance with a determination that an interval duration between a currently responded trigger operation and a previously responded trigger operation is less than a predetermined duration, the currently responded trigger operation is determined to be the combo operation.

According to one or more embodiments of the present disclosure, the method further comprises: obtaining participant information corresponding to a target user sending the trigger operation, wherein the live stream content of the target live stream room relates to a first team and a second team, the participant information is used to indicate a target team in the first team and the second team, and the participant information is generated based on a team selection instruction sent by the target user to the target live stream room; and determining a corresponding target effect according to the participant information.

According to a second aspect, according to one or more embodiments of the present disclosure, a live stream interaction method is provided, applied in a server, including:
configuring a first interaction component for a target live stream room, wherein the first interaction component is displayed in a live stream interface of a target live stream room; receiving a trigger request for the first interaction component, and performing statistics on a total number of clicks, wherein the trigger request is generated based on a trigger operation for the first interaction component, and the total number of clicks represents a number of times of target user triggering on the first interaction component in the target live stream room; and when the total number of clicks reaches a first predetermined number of times, sending effect trigger information to a terminal device to cause the terminal device to display a target effect in a live stream interface of the target live stream room.

According to a third aspect, embodiments of the present disclosure provide a live stream interaction apparatus, applied in a terminal device, including:
a display module, configured to display a first interaction component in a live stream interface of a target live stream room when a first predetermined condition is satisfied;
an interaction module, configured to receive at least one trigger operation for the first interaction component; and
a trigger module, configured to, in accordance with a determination that the total number of clicks reaches a first predetermined number of times, display a target effect in a live stream interface of the target live stream room, where the total number of clicks represents a number of times of target user triggering on the first interaction component in the target live stream room.

According to one or more embodiments of the present disclosure, the display module is specifically configured to: receive live stream information sent by a server, where the live stream information represents a live stream event corresponding to the target live stream room, and the live stream event is triggered based on a specific live stream content; and when the live stream event corresponding to the live stream information is a target event, display a first interaction component in a live stream interface of the target live stream room, where the first interaction component has a first component appearance for guiding application of a trigger operation to the first interaction component.

According to one or more embodiments of the present disclosure, before displaying the target effect in the live stream interface of the target live stream room, the trigger module is further configured to: determine an effect type of the target effect based on the live stream information.

According to one or more embodiments of the present disclosure, after receiving the at least one trigger operation for the first interaction component, the interaction module is further configured to: in response to at least one trigger operation for the first interaction component, display a corresponding action image for representing a percussion action applied to the first component appearance.

According to one or more embodiments of the present disclosure, the live stream interface further includes a second interaction component, and the second interaction component displays the trigger condition of the target effect and/or the content of the target effect; the display module is specifically configured to display the first interaction component in the live stream interface of the target live stream room in response to the trigger operation for the second interaction component.

According to one or more embodiments of the present disclosure, after displaying the first interaction component in the live stream interface of the target live stream room, the interaction module is further configured to: display a countdown component corresponding to the first interaction component, the countdown component indicating a remaining duration that the first interaction component can respond to a trigger operation; and after the remaining duration is less than the duration threshold, display the total number of clicks.

According to one or more embodiments of the present disclosure, the interaction module is further configured to: display a number of combos, where the number of combos represents in a process of responding to the trigger operation multiple times, a number of times that the trigger operation is consecutively determined to be a combo operation; and wherein in accordance with a determination that an interval duration between a currently responded trigger operation and a previously responded trigger operation is less than a predetermined duration, the currently responded trigger operation is determined to be the combo operation.

According to one or more embodiments of the present disclosure, the trigger module is further configured to: obtain participant information corresponding to a target user sending a trigger operation, where the live stream content of the target live stream room relates to a first team and a second team, the participant information is used to indicate a target team in the first team and the second team, and the participant information is generated based on a team selection instruction sent by the target user to the target live stream room; and determine a corresponding target effect based on the participant information.

According to a fourth aspect, a live stream interaction apparatus is provided according to one or more embodiments of the present disclosure, including:
a configuration module, configured to configure a first interaction component for a target live stream room, where the first interaction component is displayed in a live stream interface of the target live stream room, the first interaction component has a first component appearance for guiding application of a trigger operation to the first interaction component;
a statistics module configured to receive a trigger request for the first interaction component, and perform statistics on a total number of clicks, where the trigger request is generated based on a trigger operation for the first interaction component, and the total number of clicks represents a number of times that a target user in the target live stream room triggers the first interaction component; and
an effect module, configured to send effect trigger information to the terminal device when the total number of clicks reaches the first predetermined number, to cause the terminal device to display the target effect in the live stream interface of the target live stream room.

According to a fifth aspect, an electronic device is provided according to one or more embodiments of the present disclosure, including: a processor, and a memory communicatively connected to the processor;
the memory storing computer executable instructions; and
the processor executing the computer-executable instruction stored in the memory to implement the live stream interaction method according to the first aspect and various possible designs of the first aspect, or the live stream interaction method according to the second aspect and the possible designs of the second aspect.

According to a sixth aspect, a computer readable storage medium is provided according to one or more embodiments of the present disclosure, the computer readable storage medium stores computer executable instructions, and when the processor executes the computer executable instruction, the live stream interaction method according to the first aspect and the possible designs of the first aspect is implemented, or the live stream interaction method according to the second aspect and the possible designs of the second aspect is implemented.

According to a seventh aspect, embodiments of the present disclosure provide a computer program product, including a computer program, where the computer program, when executed by a processor, implements the live stream interaction method according to the first aspect and the possible designs of the first aspect, or the live stream interaction method according to the second aspect and the possible designs of the second aspect.

The above description is merely an illustration of the preferred embodiments of the present disclosure and the principles of the applied technology. It should be understood by those skilled in the art that the disclosure in the present disclosure is not limited to the technical solutions of the specific combination of the above technical features, and should also cover other technical solutions formed by any combination of the above technical features or their equivalent features without departing from the above disclosed concept. For example, the above features are the technical solutions formed by mutually replacing technical features disclosed in the present disclosure (but not limited to).

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and/or methodological acts, it is to be understood that the subject matter defined in the appended claims is not necessarily limited to the specific features or acts described above. Rather, the specific features and acts described above are merely exemplary forms of implementing the claims.

## Claims

1. A method of live stream interaction, comprising:
in accordance with a determination that a first predetermined condition is satisfied, displaying a first interaction component in a live stream interface of a target live stream room;
receiving a trigger operation for the first interaction component;
in accordance with a determination that the trigger operation for the first interaction component satisfies a second predetermined condition, displaying a target effect in the live stream interface of the target live stream room.

2. The method of claim 1, wherein displaying the first interaction component in the live stream interface of the target live stream room in accordance with the determination that the first predetermined condition is satisfied comprises:
receiving live stream information sent by a server, the live stream information representing a live stream event corresponding to the target live stream room;
in accordance with a determination that the live stream event corresponding to the live stream information is a target event, displaying the first interaction component in the live stream interface of the target live stream room, wherein the first interaction component has a first component appearance for guiding application of the trigger operation to the first interaction component.

3. The method of claim 2, wherein before displaying the target effect in the live stream interface of the target live stream room, the method further comprises:
determining an effect type of the target effect based on the live stream information.

4. The method of claim 1, wherein the live stream interface further comprises a second interaction component for displaying a trigger condition of the target effect and/or content of the target effect, and displaying the first interaction component in the live stream interface of the target live stream room in accordance with the determination that the first predetermined condition is satisfied comprises:
in response to a trigger operation for the second interaction component, displaying the first interaction component in the live stream interface of the target live stream room.

5. The method of claim 1, wherein in accordance with the determination that the trigger operation for the first interaction component satisfies the second predetermined condition, displaying the target effect in the live stream interface of the target live stream room comprises:
in accordance with a determination that a total number of clicks on the first interaction component reaches a first predetermined number, displaying the target effect in the live stream interface of the target live stream room, the total number of clicks representing a number of times of user triggering on the first interaction component in the target live stream room.

6. The method of claim 5, wherein after displaying the first interaction component in the live stream interface of the target live stream room, the method further comprises:
displaying a countdown component corresponding to the first interaction component, the countdown component indicating a remaining duration that the first interaction component can respond to a click;
displaying the total number of clicks when the remaining duration is less than a duration threshold.

7. The method of claim 5, wherein the method further comprises:
displaying a number of combos, the number of combos representing, in a process of responding to the trigger operation multiple times, a number of times that the trigger operation is consecutively determined to be a combo operation,
wherein in accordance with a determination that an interval duration between a currently responded trigger operation and a previously responded trigger operation is less than a predetermined duration, the currently responded trigger operation is determined to be the combo operation.

8. The method of claim 1, wherein live stream content of the live stream room relates to a plurality of participants, and the method further comprises:
obtaining participant information of a target participant selected by a target user corresponding to the trigger operation, the target participant being one of the plurality of participants;
determining a corresponding target effect according to the participant information of the target participant.

9. A live stream interaction method, comprising:
configuring a first interaction component for a target live stream room, wherein the first interaction component is displayed in a live stream interface of the target live stream room;
receiving a trigger request for the first interaction component, the trigger request generated based on a trigger operation for the first interaction component;
in accordance with a determination that the trigger request satisfies a second predetermined condition, sending effect trigger information to a terminal device, to cause the terminal device to display a target effect in the live stream interface of the target live stream room.

10. A live stream interaction apparatus, comprising:
a display module, configured to display a first interaction component in a live stream interface of a target live stream room in accordance with a determination that a first predetermined condition is satisfied;
an interaction module, configured to receive a trigger operation for the first interaction component;
a trigger module, configured to display, in accordance with a determination that the trigger operation for the first interaction component satisfies a second predetermined condition, a target effect in the live stream interface of the target live stream room.

11. An apparatus of five stream interaction, comprising:
a configuration module, configured to configure a first interaction component for a target live stream room, wherein the first interaction component is displayed in a live stream interface of the target live stream room;
a statistics module, configured to receive a trigger request for the first interaction component, the trigger request generated based on a trigger operation for the first interaction component;
an effect module, configured to in accordance with a determination that the trigger request satisfies a second predetermined condition, send effect trigger information to a terminal device to cause the terminal device to display a target effect in the live stream interface of the target live stream room.

12. An electronic device, comprising: a processor, and a memory communicatively connected to the processor,
the memory storing computer-executable instructions,
the processor executing the computer-executable instructions stored in the memory to implement the method of any of claims 1 to 9.

13. A computer-readable storage medium storing computer-executable instructions, the computer-executable instructions, when executed by a processor, implementing the method of live stream interaction of any of claims 1 to 9.

14. A computer program product, comprising a computer program, the computer program, when executed by a processor, implementing the method of live stream interaction of any of claims 1 to 9.
